(19) Europäisches Patentamt
European Patent Office
Office européen des brevets

(11) **EP 4 600 688 A1**

(12) **EUROPEAN PATENT APPLICATION**

(43) Date of publication:
**13.08.2025 Bulletin 2025/33**

(21) Application number: **25155935.7**

(22) Date of filing: **05.02.2025**

(51) International Patent Classification (IPC):
**G01S 7/02** (2006.01)     **G01S 7/35** (2006.01)
**G01S 13/34** (2006.01)     **G01S 13/42** (2006.01)
**G01S 13/58** (2006.01)     G01S 13/931 (2020.01)

(52) Cooperative Patent Classification (CPC):
**G01S 7/023; G01S 7/356; G01S 13/343;
G01S 13/42; G01S 13/584;** G01S 13/931

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.02.2024  RO 202400048**

(71) Applicant: **NXP B.V.**
**5656 AG Eindhoven (NL)**

(72) Inventors:
• YOUN, Jihwan
  **5656AG Eindhoven (NL)**
• LI, Jun
  **5656AG Eindhoven (NL)**
• BRIGALDA, Adriana
  **5656AG Eindhoven (NL)**
• WU, Ryan Haoyun
  **5656AG Eindhoven (NL)**

(74) Representative: **Hardingham, Christopher Mark**
**NXP Semiconductors
Intellectual Property Group
The Cattle Barn
Upper Ashfield Farm, Hoe Lane
Romsey, Hampshire S051 9NJ (GB)**

(54)     **RADAR SYSTEM AND METHOD WITH INTERFERENCE SUPPRESSION**

(57)     Radar systems and interference suppression methods are described, including a radar system that includes communication circuitry configured to transmit radar signals and to receive reflections of the transmitted radar signals reflected by an object in an environment of the radar system and processing circuitry. The processing circuitry is configured to generate a spectrogram by converting samples of the reflections into a time-frequency domain, determine a plurality of interference thresholds, including a respective interference threshold for each frequency bin of the spectrogram, identify interfered cells of the spectrogram based on the plurality of interference thresholds, determine scaling factors for the interfered cells based on at least the plurality of interference thresholds and magnitudes of the interfered cells, generate an interference-suppressed spectrogram by applying the scaling factors to the interfered cells to reduce the magnitudes of the interfered cells, and generate interference-suppressed samples based on the interference-suppressed spectrogram.

FIG. 3

**Description**

### TECHNICAL FIELD

Embodiments of the subject matter described herein relate generally to radar systems, such as automotive radar systems, including radar systems that employ methods for processing radar signal reflections to characterize a target while suppressing interference.

### BACKGROUND

Radar systems and associated signals are susceptible to interference, as may come from other radars or a variety of sources. This interference can pose challenges to accurately and adequately processing received radar signal reflections. For example, as the use of automotive radars increases, the chance of experiencing radar-to-radar interference on the road escalates, which can degrade the detection automotive radar performance. When a radar system experiences interference due to signals from other radar systems, the detection performance of the radar system deteriorates. Proper interference suppression is therefore needed to obtain suitable, reliable radar system performance.

### BRIEF DESCRIPTION OF DRAWINGS

A more complete understanding of the subject matter may be derived by referring to the detailed description and claims when considered in conjunction with the following figures, wherein like reference numbers refer to similar elements throughout the figures. Elements in the figures are illustrated for simplicity and clarity and have not necessarily been drawn to scale. The figures along with the detailed description are incorporated and form part of the specification and serve to further illustrate examples, embodiments and the like, and explain various principles and advantages, in accordance with the present disclosure, wherein:

FIG. 1 shows a radar system that may be configured to perform interference suppression, in accordance with various embodiments;
FIG. 2 shows an illustrative process flow for a method of radar signal processing that includes interference suppression, in accordance with various embodiments;
FIG. 3 shows an illustrative process flow for a method of interference suppression that includes time-frequency-domain spectrogram thresholding and application of adaptive scaling factors for interference suppression, in accordance with various embodiments;
FIG. 4 shows a process for transforming raw ADC samples into interference-suppressed ADC samples using time-frequency domain spectrogram thresholding and application of adaptive scaling factors for interference suppression, in accordance with various embodiments; and
FIG. 5 shows a graph illustrating the probability of detection of an object by a radar system versus distance between the radar system and an interfering transmitter for an interference suppression technique, such as the method of FIG. 2, and, for comparison, for other approaches and conditions, in accordance with various embodiments.

### DETAILED DESCRIPTION

The following detailed description is merely illustrative in nature and is not intended to limit the embodiments of the subject matter or the application and uses of such embodiments. Furthermore, there is no intention to be bound by any expressed or implied theory presented in the preceding technical field, background, or the following detailed description.
For simplicity and clarity of illustration, the drawing figures illustrate the general manner of construction, and descriptions and details of well-known features and techniques may be omitted to avoid unnecessarily obscuring the present disclosure. Additionally, elements in the drawing figures are not necessarily drawn to scale. For example, the dimensions of some of the elements or regions in the figures may be exaggerated relative to other elements or regions to help improve understanding of embodiments described herein.
The terms "first," "second," "third," "fourth" and the like in the description and the claims, if any, may be used for distinguishing between similar elements and not necessarily for describing a particular sequential or chronological order. It is to be understood that the terms so used are interchangeable under appropriate circumstances such that the embodiments described herein are, for example, capable of operation in sequences other than those illustrated or otherwise described herein. Furthermore, the terms "comprise," "include," "have" and any variations thereof, are intended to cover non-exclusive inclusions, such that a process, method, article, or apparatus that comprises a list of elements is not necessarily limited to those elements but may include other elements not expressly listed or inherent to such process, method, article, or apparatus. The term "coupled," as used herein, is defined as directly or indirectly connected in an electrical or non-electrical manner. As used herein the terms "substantial" and "substantially" mean sufficient to accomplish the stated purpose in a practical manner and that minor imperfections, if any, are not significant for the stated purpose. As used herein, the words "exemplary" and "example" mean "serving as an example, instance, or illustration." Any implementation described herein as exemplary or an example is not necessarily to be construed as preferred or advantageous over other implementations. In addition, certain terms may also be used herein for reference only, and thus are not intended to be limiting. For the sake of brevity, conventional semiconductor fabrication techniques may not be described in detail herein.

Directional references such as "top," "bottom," "left," "right," "above," "below," and so forth, unless otherwise stated, are not intended to require any preferred orientation and are made with reference to the orientation of the corresponding figure or figures for purposes of illustration.

Various embodiments described herein relate to linear frequency modulation (LFM) radar systems (e.g., automotive radar systems) that may operate in highly congested spectrum environments, such as those in which LFM radars non-negligibly interfere with one another. For example, various aspects are directed to embodiments in which vehicles may be equipped with one or multiple automotive radar systems. Raw analog-to-digital converter (ADC) samples may be processed to remove or suppress interference components before subsequent processing is carried out, in accordance with one or more embodiments.

In one or more embodiments herein, portions of received radar signals (sometimes referred to herein as "reflected radar signals" or "reflections of transmitted radar signals") exhibiting strong interference are identified by the signal processor of a radar system based on one or more interference thresholds and those signals with magnitudes within (e.g., below) an associated interference threshold are utilized in determining a range response for a target, while those signals with magnitudes exceeding the associated interference threshold are reduced in magnitude (i.e., suppressed) via application of an adaptive scaling factor to interfered cells of a spectrogram representation of the received radar signals. For example, an interference threshold may be determined for each frequency bin (e.g., row) of a time-frequency domain spectrogram of the received radar signals, which may be obtained by using time-frequency analysis, such as by computing the Short Time Fourier Transform (STFT) of raw ADC samples representing the received radar signals. In one or more embodiments, a respective adaptive scaling factor may be determined by the signal processor of the radar system for each cell of the spectrogram. For example, cells that do not exceed their associated interference threshold are unchanged, and cells that exceed their associated interference threshold are determined to have an adaptive scaling factor of between 0 and 1. The adaptive scaling factors are then applied to (e.g., via multiplication) the associated interfered cells, thereby reducing the magnitudes of interfered cells having adaptive scaling factors that are less than 1. By reducing the magnitudes of the interfered cells in the time-frequency domain spectrogram, generating an interference-suppressed spectrogram, interference components are suppressed in the ADC representations of the reflected radar signals, such that interference-suppressed ADC samples are generated when subsequently converting the interference-suppressed spectrogram back to the time domain, which may be performed via computation of an inverse STFT (iSTFT) of the interference-suppressed spectrogram.

The approach used to determine the interference threshold for each frequency bin of the spectrogram may vary. For instance, for a given frequency bin (e.g., row) of the time-frequency domain spectrogram, a predefined target signal magnitude may be implemented, such that spectrogram cells with magnitudes exceeding the target signal magnitude for the associated frequency bin are identified (as a cell that is affected by interference, sometimes referred to herein as an "interfered cell"). In one or more embodiments, the signal processor may define an interference threshold for each frequency bin of the STFT spectrogram. In accordance with various embodiments, the interference thresholds may be predefined, or may be dynamically determined using histogram analysis, MIN-of-MAX thresholding, or another suitable thresholding technique.

Interference suppression processes described herein may be performed prior to performing range compression (e.g., performed by applying, by the signal processor, a fast-time Fast Fourier Transform (FFT) to the interference-suppressed ADC samples), doppler compression (e.g., performed by applying, by the signal processor, a slow-time Fast Fourier Transform (FFT) to the interference-suppressed and range-compressed ADC samples), peak detection, angle processing, and target tracking. In this way, the interference suppression techniques described herein may mitigate the impact of interference on the ability of the radar system to accurately detect peaks and determine object locations and velocities.

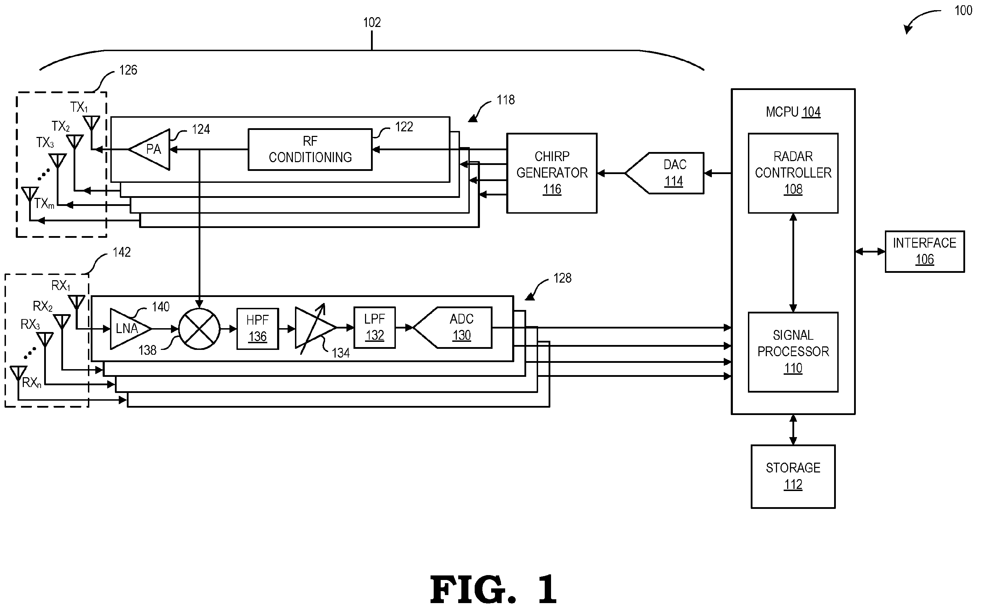

FIG. 1 shows an illustrative diagram of a radar system 100 which includes a radar device 102 (sometimes referred to herein as "radar communication circuitry 102" or "radar front-end circuitry 102") that is connected to a radar microcontroller and processing unit (MCPU) 104, where the MCPU 104 may be configured to perform interference suppression of analog-to-digital converter (ADC) samples representing received reflected radar signals. Such interference suppression may be performed prior to range and Doppler compression in accordance with one or more embodiments. In one or more embodiments, the radar system 100 may be a Multiple-Input Multiple-Output (MIMO) radar system, such as a Linear Frequency Modulation (LFM) MIMO radar system (e.g., an LFM automotive MIMO radar system). In one or more embodiments, the radar device 102 may include radar front-end hardware. In one or more embodiments, the radar device 102 may be embodied as a line-replaceable unit (LRU) or modular component that is designed to be replaced quickly at an operating location. Similarly, the radar MCPU 104 may be embodied as a line-replaceable unit (LRU) or modular component. Although a single or mono-static radar devices are shown, it will be appreciated that additional distributed radar devices may be used to form a distributed or multi-static radar. In addition, the depicted radar system 100 may be implemented in integrated circuit form with the radar device 102 and the radar MCPU 104 formed on separate integrated circuits (chips) or on a single chip, depending on the application. In accordance with various embodiments, the radar system 100 may be implemented as part of an automotive system in conjunction with an Advanced Driver Assistance System (ADAS).

The radar device 102 includes one or more transmitting antenna elements 126 (sometimes referred to herein as "transmit antennas 126") and receiving antenna elements 142 (sometimes referred to herein as "receive antennas 142") connected, respectively, to one or more radiofrequency (RF) transmitter (TX) modules 118 and receiver (RX) modules 128. Each transmit antenna 126 and TX module may be associated with a respective transmit channel of a group of transmit channels designated herein as $TX_1$, $TX_2$, $TX_3$, ... $TX_m$, where "m" is the total number of transmit (TX) channels. Each receive antenna 142 and RX module 128 may be associated with a respective receive channel of a group of receive channels designated herein as $RX_1$, $RX_2$, $RX_3$, ... $RX_n$, where "n" is the number of receive (RX) channels. As a non-limiting example, a radar device (e.g., the radar device 102) can include individual antenna elements (e.g., antenna elements 126) connected, respectively, to four transmitter modules (e.g., the transmitter modules 118) and sixteen receiver modules (e.g., the receiver modules 128). These quantities of transmitter and receiver antenna elements and modules are intended to be illustrative and not limiting, with other quantities of these elements being possible in one or more other embodiments, such as four transmitter modules 118 and six receiver modules 128, or a single transmitter module 118 and/or a single receiver module 128. The radar device 102 includes a chirp generator 116, which is configured to supply chirp input signals to the transmitter modules 118. To this end, the chirp generator 116 is configured to receive input program and control signals, including, as non-limiting examples, a reference local oscillator (LO) signal, a chirp start trigger signal, and program control signals, from the MCPU 104 via a digital-to-analog converter (DAC) 114. The chirp generator 116 is configured to generate chirp signals and send the chirp signals to the transmitter modules 118 for transmission via the transmitting antenna elements 126. Each transmitter module 118 includes an RF conditioning module 122 that is configured to filter the phase-coded chirp signals. Each transmitter module 118 includes a power amplifier 124 configured to amplify the filtered, phase-coded chirp signal before they are provided to and transmitted via one or more corresponding transmitting antenna elements 126. Herein, a transmitted chirp signal is sometimes referred to as a "transmit signal".

The radar signal transmitted by the transmitter modules 118 and transmit antennas 126 may be reflected by an object in an environment of the radar device 102, and part of the reflected radar signal, sometimes referred to herein as a "return signal" or a "reflection", is received by the receiving antenna elements 142 at the radar device 102. At each receiver module 128, the received (radio frequency) antenna signal is amplified by a low noise amplifier (LNA) 140 and then fed to a mixer 138 where it is mixed with the transmitted chirp signal generated by the RF conditioning module 122. The resulting intermediate frequency signal is fed to a high-pass filter (HPF) 136. The resulting filtered signal is fed to a variable gain amplifier 134, which amplifies the signal before feeding it to a low pass filter (LPF) 132. This re-filtered signal is fed to an analog/digital converter (ADC) 130 and is output by each receiver module 128 (e.g., output to the signal processor 110 of the MCPU 104) as a digital signal. In this way, the receiver modules 128 compress the target echo of various delays into multiple sinusoidal tones whose frequencies correspond to the round-trip delay of the echo.

In the radar system 100, the radar MCPU 104 may be connected and configured to supply input control signals to the radar device 102 and to receive therefrom digital output signals generated by the receiver modules 128. In one or more embodiments, the radar MCPU 104 includes a radar controller 108 and a signal processor 110, either or both of which may be embodied as a microcontroller unit or other processing unit. The MCPU 104, the radar controller 108, and the signal processor 110 each include or are implemented by computer processing circuitry, in accordance with various embodiments. The radar controller 108 can receive data from the radar device 102 (e.g., from the receiver modules 128) and can control radar parameters of the radar device 102, such as frequency band, length of each radar frame, and the like via the DAC 114. For example, the DAC 114 may be used to adjust the radar chirp signals output from the chirp generator 116 included in the radar device 102. The signal processor 110 may be configured and arranged for signal processing tasks such as, but not limited to, target object identification, interference mitigation, computation of the distance or range to a target object, computation of the radial velocity of a target object, and computation of the AoA of signals reflected by a target object, and the like. Herein, the term "AoA" or "Angle-of-Arrival" refers to the angle of a reflected signal (e.g., a radar signal) incident on an antenna array. The signal processor 110 can provide calculated values associated with such computations to a storage 112 and/or to other systems via an interface 106.

The interface 106 can enable the MCPU 104 to communicate with other systems over local and wide area networks, the internet, automotive communication buses, and/or other kinds of wired or wireless communication systems, as non-limiting examples. In one or more embodiments, the MCPU 104 can provide the calculated values over the interface 106 to other systems, such as a radar-camera-lidar fusion system; an automated driving assistance system including parking, braking, or lane-change assistance features; and the like. The storage 112 can be used to store instructions for the MCPU 104, received data from the radar device 102, calculated values from the signal processor 110, and the like. Storage 112 can be any suitable storage medium, such as a volatile or non-volatile computer-readable memory.

To control the transmitter modules 118, the radar controller 108 may, for example, be configured to generate transmitter input signals, such as program, control trigger, reference LO signal(s), calibration signals, frequency spectrum shaping signals (such as ramp generation in the case of Frequency-Modulated Continuous Wave (FMCW) radar). The radar controller may, for example, be configured to receive data signals, sensor signals, and/or register programming or state machine signals for RF (radio frequency) circuit enablement sequences.

At each receiver module 128, digital output signals are generated from target return signals for digital processing by the signal processor 110 to construct and accumulate multiple-input multiple-output (MIMO) array vector outputs forming a MIMO aperture for use in computing plots or maps for AoA estimation and target object tracks. In particular, the signal processor 110 may perform an interference suppression process on the digital output signals before processing the resultant interference-suppressed signals using one or more fast Fourier transform (FFT) modules or Discrete Fourier Transform (DFT) modules, such as a fast-time (range) FFT module. Processing by these modules of the signal processor 110 generates a range chirp antenna cube (RCAC) and a slow-time (Doppler) FFT module which generates a range-Doppler antenna cube (RDAC) (e.g., including range-Doppler response maps for each RX antenna). The signal processor 110 may then perform Constant False Alarm Rate (CFAR) detection on the range-Doppler antenna cube to detect peaks in the RDAC. The signal processor 110 may further process the RDAC based on the detected peaks to construct a MIMO array vector which the signal processor 110 then processes to perform AoA estimation and target object tracking. The MCPU 104 may then output the resulting target tracks (e.g., via the interface 106) to other automotive computing or user interfacing devices for further processing or display.

In one or more embodiments, the interference suppression process performed by the signal processor 110 includes generating a spectrogram representation of a group of raw ADC samples (e.g., by applying Short Time Fourier Transform (STFT) or another suitable transform to the raw ADC samples) output by the ADC 130, where the raw ADC samples correspond to detected reflected radar signals received by the receive antennas 142. The signal processor 110 then determines respective interference thresholds (sometimes referred herein to as "frequency-specific" interference thresholds) for each frequency or range of frequencies (e.g., frequency bin) represented in the spectrogram. The signal processor 110 then identifies interfered cells of the spectrogram, where a cell may be identified as an "interfered cell" if the magnitude of the cell exceeds the interference threshold determined for the frequency or frequency range associated with that cell. The signal processor 110 then determines an adaptive scaling factor for each interfered cell based on one or more of the magnitude of the interfered cell, the frequency-specific interference threshold associated with that cell, or the maximum signal level among cells of the frequency bin that includes the interfered cell. The signal processor 110 then applies the adaptive scaling factors to the corresponding interfered cells (e.g., multiplies the value of each interfered cell by the adaptive scaling factor determined for that interfered cell) to generate an interference-suppressed spectrogram. The signal processor 110 then transforms the interference-suppressed spectrogram back to the time domain (e.g., by applying an inverse STFT (iSTFT) or another suitable transform to the interference-suppressed spectrogram) to generate interference-suppressed ADC samples. Examples of such interference suppression processes are described in more detail below.

Conventional interference cancellation techniques used in radar systems typically involve identifying and zeroing interference components in received radar signal data. However, by zeroing interference components of the received radar signal data, the magnitude of spurious sidelobes in the received radar signal data is increased, which can introduce so-called "ghost artifacts" to the data, which can result in false positive peak detections / object detections. In contrast, interference suppression techniques that may be implemented by the signal processor 110 reduce the magnitude of interference components (e.g., "interfered cells" of a spectrogram representation of received radar signal reflections) rather than removing such interference components entirely. In this way, the interference suppression techniques described herein may reduce interference levels in received radar signal reflections, while also reducing the occurrence of ghost artifacts compared to conventional interference cancellation approaches that rely on zeroing of interference components.

Interference suppression techniques implemented by the signal processor 110 may preserve at least a portion of "strong target" signal data that may be misidentified as interference, at least these techniques reduce the magnitude of interference components rather than eliminating them completely. In contrast, conventional interference cancellation techniques that rely on zeroing for interference component removal risk completely removing strong target signal data that is misidentified as interference, resulting in undesirable degradation of the signal-to-noise ratio (SNR) of resultant interference-suppressed signal data.

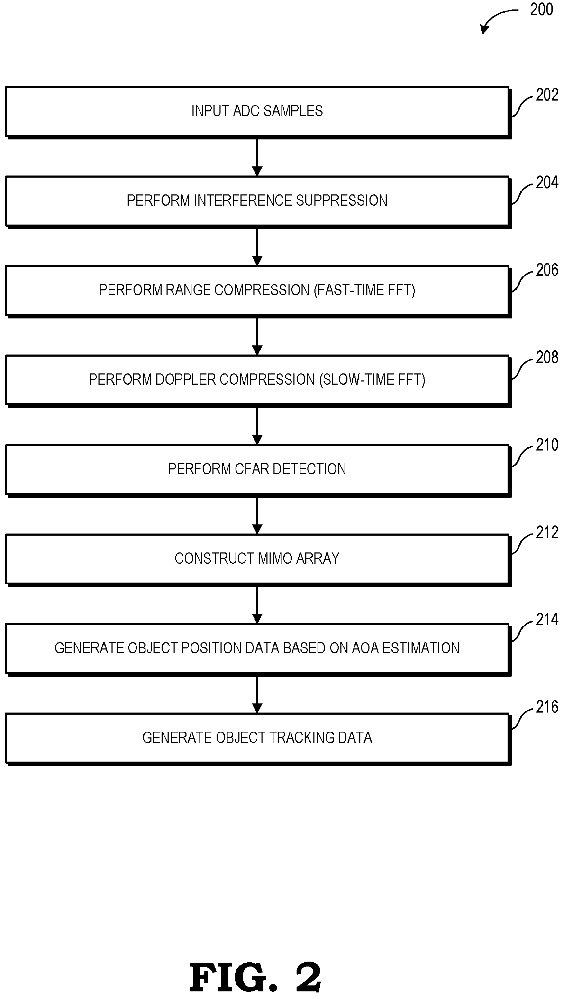

FIG. 2 shows an illustrative process flow for a method 200 by which objects in an environment around a MIMO radar system may be identified and tracked by processing raw data representing sampled return signals corresponding to reflections of transmitted radar signals (e.g., reflected by one or more such objects). The method 200 may be performed using either or both of a radar controller (e.g., the radar controller 108 of FIG. 1) and signal processor (e.g., the signal processor 110 of FIG. 1) of a radar MCPU (e.g., the MCPU 104 of FIG. 1), in accordance with one or more embodiments. The method 200 is described with reference to elements of the radar system 100 of FIG. 1. However, it should be understood that this is illustrative and not limiting, at least in that other suitable radar systems may be used to carry out the method 200 in one or more other embodiments.

At block 202, the signal processor 110 of the MCPU 104 of the radar system 100 receives raw sample data (sometimes referred to as "ADC samples") from one or more ADCs 130 of the receiver modules 128. These ADC samples may be output by the ADCs 130 as digital signals. These ADC samples represent received signals (sometimes referred to as "reflected signals" or "return signals") corresponding to reflections of transmit signals (e.g., chirps) transmitted by the transmitter modules 118 via the transmit antenna elements 126, where the transmit signals are reflected off of one or more target objects in the environment of the radar system 100. The return signals are received by the receiver modules 128 via the receive antenna elements 142.

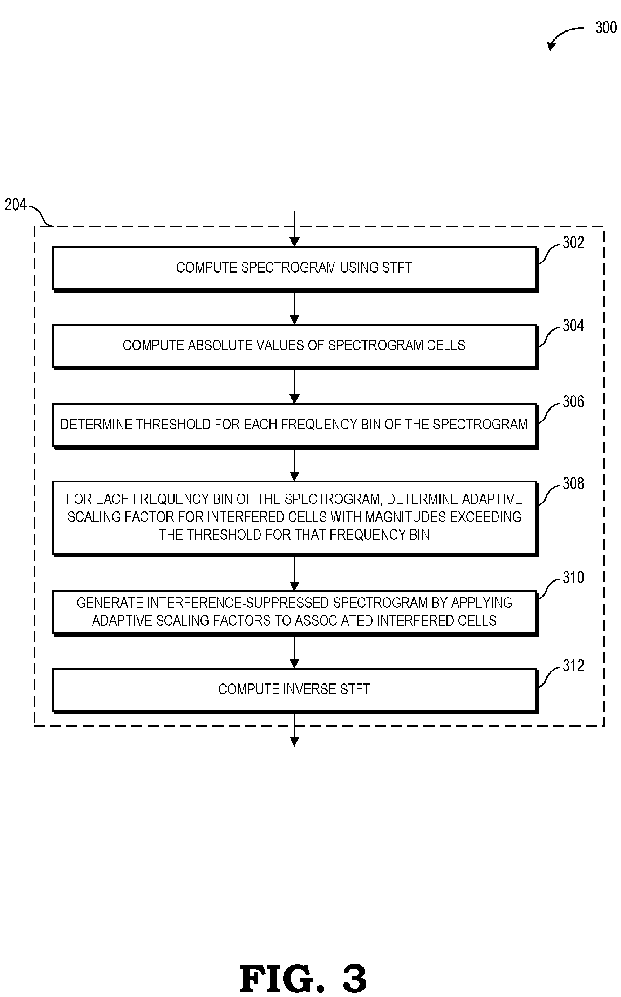

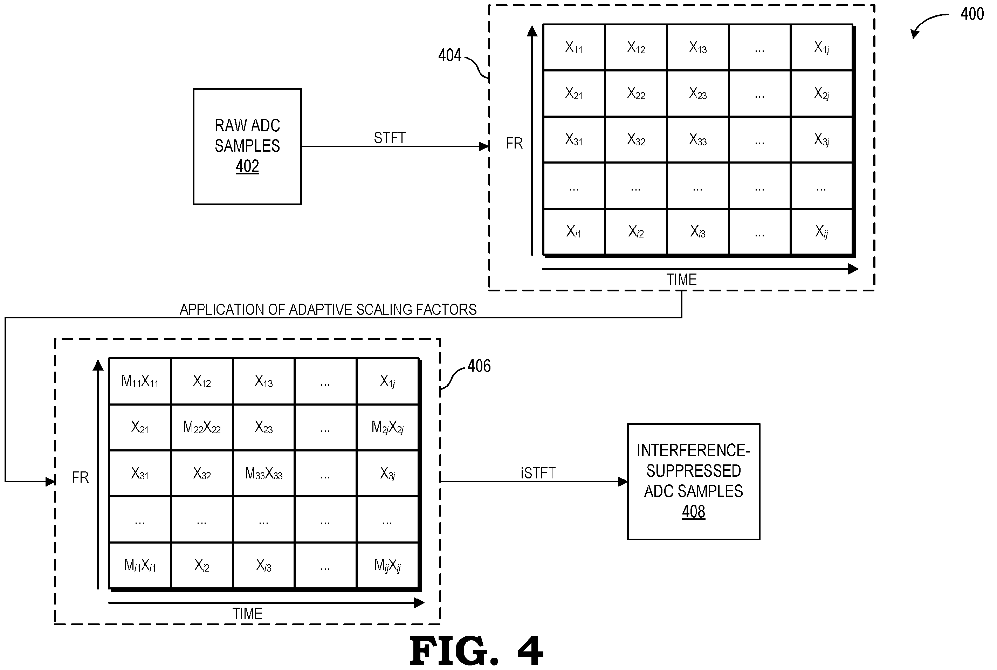

At block 204, the signal processor 110 performs interference suppression to reduce the magnitude of interference components in the raw ADC data. In one or more embodiments, the interference suppression performed by the signal processor 110 may include performing an STFT on the raw ADC data to produce a spectrogram, generating an interference-suppressed spectrogram by identifying interference components in the spectrogram (e.g., "interfered cells" of the spectrogram) using at least one thresholding approach in conjunction with a determined set (e.g., matrix) of magnitudes of spectrogram cells, determining and applying respective adaptive scaling factors for each of the interfered cells to reduce the magnitudes of the interfered cells, and performing an inverse STFT (e.g., "iSTFT") to produce interference-suppressed ADC samples. Herein, an "adaptive scaling factor" refers to a scaling factor, such as a weight between 0 and 1, that is adapted, in the present context, to a given cell of the spectrogram based, at least in part, on the magnitude of that cell and a threshold associated with that cell. The threshold may be determined for a particular frequency bin of the spectrogram that includes the given cell. The signal processor 110 may apply the adaptive scaling factor to the corresponding interfered cell of the spectrogram by multiplying the value of the interfered cell by the adaptive scaling factor. Examples of how the signal processor 110 may perform interference suppression using such adaptive scaling factors are described in more detail below in connection with FIGS. 3 and 4.

At block 206, the signal processor 110 performs range compression of the interference-suppressed ADC samples by performing a fast-time FFT or DFT on the interference-suppressed ADC samples, for example. The signal processor 110 may generate a range chirp antenna cube (RCAC) as an output of this fast-time FFT or DFT.

At block 208, the signal processor 110 performs Doppler compression of the RCAC by performing a slow-time FFT or DFT on the RCAC, for example. The signal processor 110 may generate a range-Doppler antenna cube as an output of this slow-time FFT or DFT. The range-Doppler antenna cube may be a three-dimensional array having dimensions $m \times n \times p$, where $m$ represents the number of Doppler bins, $n$ represents the number of range bins, and $p$ represents the number of RX channels (e.g., corresponding to the number of receive antenna elements 142 or the number of receiver modules 128) represented in the range-Doppler antenna cube. Each element of the range-Doppler antenna cube may encode complex amplitude of a received signal for a particular range bin, Doppler bin, and RX channel.

In the range-Doppler antenna cube, each range bin represents ranges or distances between the radar system and a target object. Each Doppler bin represents Doppler shift values corresponding to velocities at which a target object may be traveling (e.g., relative to the ego velocity of the radar system). Such velocities may be calculated based on the determined Doppler shift associated with the target object.

At block 210, the signal processor 110 performs CFAR detection to determine the location of peaks (i.e., "detected peaks") in the range-Doppler antenna cube. While the signal processor 110 is described as using CFAR detection in the present example, it should be understood that this is intended to be illustrative and not limiting, such that other suitable peak detection approaches may be used in one or more other embodiments.

At block 212, the signal processor 110 constructs a virtual MIMO array based on the range-Doppler antenna cube and the detected peaks.

At block 214, the signal processor 110 generates object position data based, at least in part, on AoA estimation performed using the virtual MIMO array. This object position data represents the positions of objects detected by the radar system 100 (e.g., relative to the position of the radar system 100).

At block 216, signal processor 110 generates object tracking data based on the object position data. In one or more embodiments, the object tracking data may be generated based on multiple sets of object position data acquired (e.g., at block 214) by the radar system 100 over time.

FIG. 3 shows an illustrative process flow for a method 300 by which a signal processor of a radar system (e.g., the signal processor 110 of the radar system 100 of FIG. 1) may suppress interference components that may be present in raw ADC samples representing reflected radar signals using a time-frequency domain spectrogram thresholding (TFTD) approach in which interference is suppressed via application of adaptive scaling factors. In one or more embodiments, the method 300 may be performed at block 204 of the method 200 of FIG. 2. The method 300 is described here with reference to elements of the radar system 100. However, it should be understood that this is illustrative and not limiting, at least in that other suitable radar systems may be used to carry out the method 300 in one or more other embodiments.

Prior to performing the method 300 (e.g., at block 202 of the method 200 of FIG. 2), the signal processor 110 receives raw ADC samples from one or more of the ADCs 130, each coupled to receiver modules 128 and RX antennas 142. Each ADC sample may represent a reflection of at least one respective chirp transmitted by the transmitter modules 118 and TX antennas 126 of the radar system 100, where such a chirp is reflected by one or more objects in the environment of the radar system 100. In addition to information from reflected chirps (i.e., reflected radar signals) originating from the radar system 100, one or more of the raw ADC samples may include interference from other signals in the environment of the radar system 100, such as radar signals transmitted by other radar systems.

At block 302, the signal processor 110 converts the raw ADC samples into the time-frequency domain by applying an STFT to the raw ADC samples to produce a spectrogram. For example, the signal processor 110 may compute a spectrogram using an STFT at block 302, by performing a series of shorter FFTs operated on windowed ADC samples.

Parameters including window size and stride size may be controlled for the STFT process. For computing an STFT output $\mathbf{X}_{STFT}$ (i.e., a spectrogram), from an input length-N ADC sample vector such as $[x_1, x_2, ... , x_N]$, with an STFT window size W [samples], a stride size S [samples], and a total of K time bins, the k-th time-bin STFT output $\mathbf{X}_{STFT,k}$ may be calculated based on Equations 1-3:

$$\mathbf{X}_{STFT} = \begin{bmatrix} \mathbf{X}_{STFT,1} \\ \mathbf{X}_{STFT,2} \\ \vdots \\ \mathbf{X}_{STFT,K} \end{bmatrix} \qquad\qquad EQ.\,1$$

$$\mathbf{X}_{STFT,k} = FFT\{\mathbf{x}_{STFT,k}\} \quad (k = 1,2, ... K) \qquad EQ.\,2$$

$$\mathbf{x}_{STFT,k} = [x_{1+(k-1)*S}, ... , x_{W+(k-1)*S}]. \qquad EQ.\,3$$

In one or more embodiments, the FFT computations performed when computing the spectrogram $\mathbf{X}_{STFT}$ can be augmented by utilizing a standard tapering window to reduce sidelobes in the STFT spectrum.

At block 304, the signal processor 110 computes the absolute value (i.e., magnitude) of each of the spectrogram cells of the spectrogram computed at block 302. For example, the signal processor may generate a matrix of spectrogram magnitudes, with each cell of the matrix of spectrogram magnitudes having a cell value equal to the magnitude of a corresponding cell of the spectrogram.

At block 306, the signal processor 110 determines a respective interference threshold for each frequency bin of the spectrogram. For example, each frequency bin of the spectrogram may include multiple spectrogram cells each corresponding to a respectively different time bin of the spectrogram. The interference threshold for a frequency bin may be considered to correspond to a maximum expected magnitude for that frequency bin, such that spectrogram cells of a frequency bin having magnitudes that exceed an associated interference threshold of that frequency bin are sometimes referred to herein as "interfered cells" - that is, cells with an increased magnitude due to interference. It should be noted that, in accordance with various embodiments, the spectrogram can be arranged into either row-based frequency bins (i.e., each row corresponds to a different frequency bin) or column-based frequency bins (i.e., each column corresponds to a different frequency bin). While the row-based frequency bin convention is used in the example spectrograms described herein, this is intended to be illustrative and non-limiting. For example, a particular frequency bin of a spectrogram may correspond to a particular row of cells of the spectrogram, given a convention in which rows of the spectrogram represent respective frequency bins and columns of the spectrogram represent respective time bins.

In one or more embodiments, the signal processor 110 computes a respective interference threshold for each frequency bin of the spectrogram using statistical analysis and/or histogram analysis of that frequency bin.

In one or more other embodiments, the signal processor 110 determines a respective interference threshold for each frequency bin of the spectrogram based on a respective MIN-of-MAX magnitude, where the signal processor may determine the MIN-of-MAX value for a given row of the spectrogram by dividing cells of the row into groups of predetermined size, determining the maximum value (maximum magnitude) of each group of cells, then determining the minimum value (minimum magnitude) from among the determined maximum values, where this minimum value is the MIN-of-MAX value. The determined MIN-of-MAX value may be used as the interference threshold directly or after applying an offset (e.g., of around 3dB as a non-limiting example). For example, the MIN-of-MAX thresholding approach may be performed using the matrix of cell magnitudes determined at block 304.

At block 308, after determining the respective interference thresholds for each frequency bin of the spectrogram, the signal processor 110 identifies interfered cells of the spectrogram based on the interference thresholds, and determines an adaptive scaling factor for each of the interfered cells. For example, the signal processor 110 may, for each frequency bin of the spectrogram, compare all cells within that frequency bin to the interference threshold determined for that bin at block 306, where the signal processor 110 identifies any of the cells that exceed their associated interference threshold as being interfered cells.

The signal processor then determines an adaptive scaling factor for each of the interfered cells. In one or more embodiments, the signal processor may determine an adaptive scaling factor for all cells of the spectrogram, then selectively apply the determined adaptive scaling factor to only those cells that exceed corresponding interference thresholds. For example, the signal processor 110 may determine a matrix of adaptive scaling factors, $\mathbf{M} \in \mathbb{R}^{W \times K}$, for a spectrogram $\mathbf{X} \in \mathbb{C}^{W \times K}$ having W rows (e.g., each corresponding to a respective frequency bin) and K columns (e.g., each corresponding to a respective time bin), based on Equations 4-6:

$$SIR_i = \frac{s_i}{MAX_i} \quad \forall i = 1, 2, \ldots, W \qquad\qquad EQ.4$$

$$SCR_{ij} = \frac{s_i}{|\mathbf{X}_{ij}|} \quad \forall i = 1, 2, \ldots, W; \; \forall j = 1, 2, \ldots, K \qquad\qquad EQ.5$$

$$\mathbf{M}_{ij} = SIR_i \times \left(\frac{2^c}{SIR_i}\right)^{SCR_{ij}} \qquad\qquad EQ.6$$

where $MAX_i$ is the maximum cell magnitude in the i-th frequency bin, $s_i$ is the interference threshold determined for the *i*-th frequency bin, $SIR_i$ is the signal-to-interference ratio (SIR) representing the ratio of the interference threshold to the maximum cell magnitude for the i-th frequency bin, $SCR_{ij}$ is the signal-to-cell ratio (SCR) representing the ratio of the interference threshold to the magnitude of the cell at indices *ij* of the spectrogram **X**, and c is a hyperparameter that may be modified to adjust the degree of suppression performed when applying the adaptive scaling factors. For example, smaller values of c result in stronger interference suppression, while smaller values of *c* result in less interference suppression.

At block 310, the signal processor 110 applies the adaptive scaling factors determined at block 308 to the interfered cells of the spectrogram to produce an interference-suppressed spectrogram. To prevent the application of an adaptive scaling factor from being applied to a non-interfered cell, the signal processor may apply a binary map $\mathbf{B} \in \mathbb{R}^{W \times K}$ indicating the locations of interfered cells of the spectrogram, where the binary map **B** may be defined based on Equation 7:

$$\mathbf{B}_{ij} = \begin{cases} 1, & \text{if } |\mathbf{X}_{ij}| > s_i \\ 0, & \text{otherwise} \end{cases} \qquad\qquad EQ.7$$

As a non-limiting example, the interference suppressed spectrogram $\widehat{\mathbf{X}} \in \mathbb{R}^{W \times K}$ may be produced by the signal processor 110 based on Equation 8:

$$\widehat{\mathbf{X}}_{ij} = \mathbf{X}_{ij} \times (1 - \mathbf{B}_{ij}) + (\mathbf{X}_{ij} \times \mathbf{B}_{ij}) \times \min(1, \mathbf{M}_{ij}) \qquad\qquad EQ.8$$

where "min" is a minimum operation that, in Equation 8, outputs the lower value of 1 and $\mathbf{M}_{ij}$. That is, using the minimum operation in this way may prevent adaptive scaling factor values greater than one from being applied to interfered cells of the spectrogram (which may occur for relatively high values of the hyperparameter c, for example), to avoid increasing the magnitude of interference components. Applying Equation 8 to generate the interference-suppressed spectrogram ensures that the adaptive scaling factor applied to any given cell of the spectrogram is between 0 and 1 and that adaptive scaling factors are not applied to non-interfered cells (e.g., the non-interfered cells of the spectrogram remain unchanged when generating the interference-suppressed spectrogram).

At block 312, the signal processor 110 converts the interference-suppressed spectrogram back to the time-domain to produce interference-suppressed ADC samples by reversing the STFT process using inverse STFT. For example, if $\hat{\mathbf{X}}_{STFT,k}$ denotes the k-th row of the interference-suppressed spectrogram matrix, the signal processor may perform an inverse STFT to compute the k-th short-time window signal using the Equation 9:

$$\hat{\mathbf{x}}_k = IFFT\{\hat{\mathbf{X}}_{STFT,k}\} = [\hat{x}_{k,1+(k-1)*S}, \dots, \hat{x}_{k,W+(k-1)*S}] \qquad EQ.9$$

where *IFFT* represents an inverse FFT. If a tapering window is applied in the forward STFT process, an inverse tapering window may be used to recover the time domain samples with correct amplitudes. The inverse FFT process may be repeated for each row of the interference-suppressed spectrogram to obtain a short-time window signal. The final ADC sample stream may be reconstructed from these overlapped short-time window signals by taking the mean of the multiple values for each ADC sample position. When the stride equals the window length, there is no overlap and the reconstructed ADC sample stream may be the concatenated version of the IFFT outputs.

Upon converting the interference-suppressed spectrogram to produce the interference-suppressed ADC samples, the signal processor 110 may perform subsequent compression, peak detection, MIMO array construction, object position data determination, and object tracking processes (e.g., corresponding to blocks 206 through 216 of the method 200 of FIG. 2, as a non-limiting example).

FIG. 4 shows a diagram 400 illustrating a process of converting raw ADC samples 402 into interference-suppressed ADC samples 408, which may be carried out by a signal processor of a radar system (e.g., the signal processor 110 of the radar system 100 of FIG. 1). In the present example, the process shown in the diagram 400 is described with reference to elements of the radar system 100 of FIG. 1. In one or more embodiments, the process illustrated in the diagram 400 may correspond to one or more blocks of the method 300 of FIG. 3.

As shown, raw ADC samples 402 are converted to a time-frequency domain spectrogram 404 having *W* rows (e.g., each corresponding to a respective frequency bin) and *K* columns (e.g., each corresponding to a respective time bin). For example, the signal processor 110 may generate the spectrogram 404 by performing an STFT on the raw ADC samples 402, as described above in connection with Equations 1-3. In the present example, each cell of the spectrogram 404 is denoted as $\mathbf{X}_{ij}$, where *i* represents the row index of the cell in the spectrogram 404 and *j* represents the column index of the cell in the spectrogram 404. Columns of the spectrogram 404 represent time bins and rows of the spectrogram 404 represent frequency bins in the present example.

An interference-suppressed spectrogram 406 is then produced based on the spectrogram 404 by applying (e.g., via multiplication) adaptive scaling factors to interfered cells of the spectrogram 404. For example, the adaptive scaling factor for a given interfered cell at index *ij* is denoted here as $\mathbf{M}_{ij}$. As shown, adaptive scaling factors are not necessarily applied to all cells of the spectrogram 406, but are instead applied only to interfered cells (i.e., cells with magnitudes exceeding a threshold determined for their associated frequency bin / row). Examples of how of adaptive scaling factors may be determined and applied by the signal processor 110 are described above in connection with Equations 4-8 and block 310 of the method 300 of FIG. 3, and some details thereof are not repeated here for sake of brevity.

The interference-suppressed spectrogram 406 is then converted back to the time domain to produce interference-suppressed ADC samples 408. For example, the signal processor 110 may perform an inverse STFT (iSTFT) on the interference-suppressed spectrogram 406 to produce the interference-suppressed ADC samples 408, as described above in connection with Equation 9 and block 312 of the method 300 of FIG. 3.

By applying adaptive scaling factors to interfered cells of the spectrogram 404 to produce the interference-suppressed spectrogram 406, rather than zeroing all identified interfered cells (i.e., setting the value of such interfered cells to zero), the occurrence of ghost artifacts is advantageously reduced when compared to conventional interference cancellation techniques. This, in turn, may advantageously reduce the probability of false detections by the radar system.

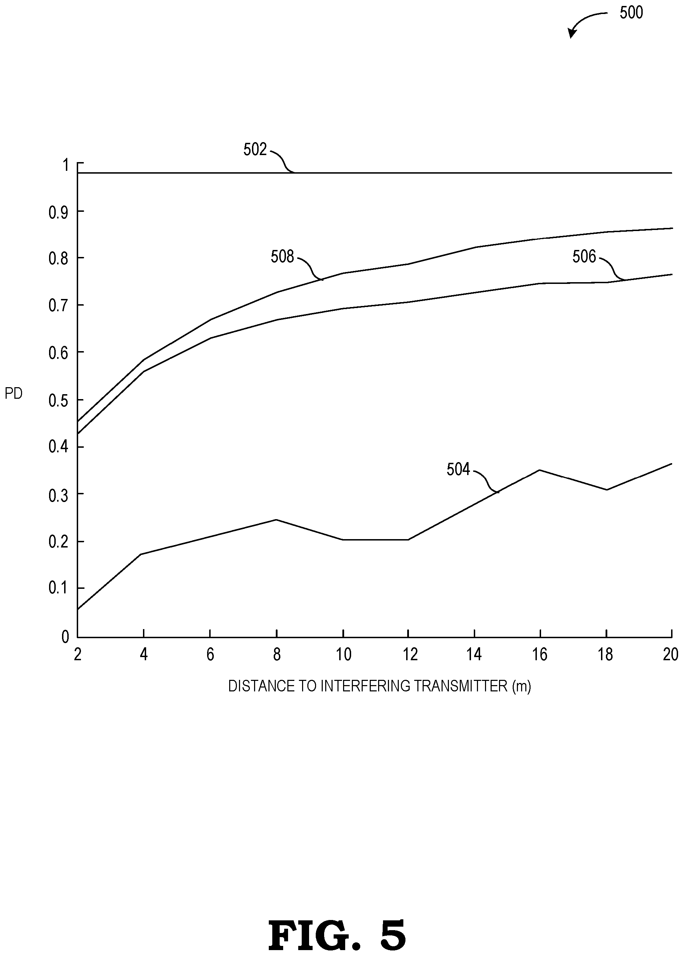

FIG. 5 shows a graph 500 illustrating the probability of detection (PD) of an object by a radar system versus distance between the radar system and an interfering transmitter, with lines 502, 504, 506, and 508 representing performance of the radar system under various conditions and configurations. More specifically, the y-axis of the graph 500 represents the probability of detection given a particular probability of false alarm of 1e-4.

Line 502 represents radar system performance when radar system encounters no interference and does not perform any interference suppression or interference cancellation. Line 504 represents radar system performance when the radar system encounters interference from the interfering transmitter and does not perform any interference suppression or interference cancellation. Line 506 represents radar system performance when the radar system encounters interference from the interfering transmitter and performs a conventional zeroing-based interference cancellation technique. Line 508 represents radar system performance when the radar system encounters interference from the interfering transmitter and performs an interference suppression technique of one or more embodiments described herein, such as the method 300 of FIG. 3.

As shown by each of lines 504, 506, 508, the probability of detection of an object by the radar system increases with increasing distance from an interfering transmitter, regardless of which, if any, interference suppression or cancellation technique is used. Comparing line 506 to lines 508 illustrates that the use of the interference suppression techniques herein improves the probability of detection compared to the conventional interference cancellation technique, which may be at least partially attributed to the lack of mitigation for ghost artifacts in the conventional interference cancellation technique. Further, the degree of improvement between lines 508 and 506 increases with increased distance from the interfering transmitter.

According to a first aspect of the present disclosure, there is provided, a radar system which includes communication circuitry configured to transmit radar signals and to receive reflections of the transmitted radar signals reflected by an object in an environment of the radar system and processing circuitry configured to generate a spectrogram by converting samples of the reflections into a time-frequency domain, determine a plurality of interference thresholds, including a respective interference threshold for each frequency bin of the spectrogram, identify interfered cells of the spectrogram based on the plurality of interference thresholds, determine scaling factors for the interfered cells based on at least the plurality of interference thresholds and magnitudes of the interfered cells, generate an interference-suppressed spectrogram by applying the scaling factors to the interfered cells to reduce the magnitudes of the interfered cells, and generate interference-suppressed samples based on the interference-suppressed spectrogram.

In one or more embodiments, the processing circuitry is configured to generate the spectrogram by performing a Short Time Fourier Transform (STFT) on the samples of the reflections.

In one or more embodiments, the processing circuitry is configured to generate the interference-suppressed samples by performing an inverse STFT on the interference-suppressed spectrogram.

In one or more embodiments, to identify the interfered cells, the processing circuitry is further configured to determine that a first magnitude of a first interfered cell of the interfered cells is greater than a first interference threshold of the plurality of interference thresholds determined for a first frequency bin that includes the first interfered cell.

In one or more embodiments, to identify the interfered cells, the processing circuitry is further configured to determine that a second magnitude of a second interfered cell of the interfered cells is greater than a second interference threshold of the plurality of interference thresholds determined for a second frequency bin that includes the second interfered cell.

In one or more embodiments, to determine the scaling factors, the processing circuitry is further configured to determine a first scaling factor for the first interfered cell based on the first magnitude of the first interfered cell, the first interference threshold, and a maximum magnitude among cells of the first frequency bin.

In one or more embodiments, to determine the first scaling factor for the first interfered cell, the processing circuitry is further configured to determine the first scaling factor based on a first ratio of the first interference threshold to the maximum magnitude and a second ratio of the first interference threshold to the first magnitude of the interfered cell. In one or more embodiments, applying the scaling factors to generate the interference-suppressed spectrogram includes multiplying the first interfered cell by the first scaling factor.

In one or more embodiments, each of the scaling factors has a respective value of between 0 and 1.

In one or more embodiments, non-interfered cells of the spectrogram are unchanged when generating the interference-suppressed spectrogram.

According to a second aspect, there is provided a method which includes generating, by processing circuitry of a radar system, a spectrogram by converting samples, of reflections of transmitted radar signals reflected by an object in an environment of the radar system, into a time-frequency domain, determining, by the processing circuitry, a plurality of interference thresholds, including a respective threshold for each frequency bin of the spectrogram, identifying, by the processing circuitry, interfered cells of the spectrogram based on the plurality interference thresholds, determining, by the processing circuitry, scaling factors for the interfered cells based on at least the plurality of interference thresholds and magnitudes of the interfered cells, generating, by the processing circuitry, an interference-suppressed spectrogram by multiplying the interfered cells by the scaling factors to reduce the magnitudes of the interfered cells, and generating, by the processing circuitry, interference-suppressed samples based on the interference-suppressed spectrogram.

In one or more embodiments, generating the spectrogram includes performing a Short Time Fourier Transform (STFT) on the samples of the reflections.

In one or more embodiments, generating the interference-suppressed samples includes performing an inverse STFT on the interference-suppressed spectrogram.

In one or more embodiments, identifying the interfered cells further includes determining that a first magnitude of a first interfered cell of the interfered cells is greater than a first interference threshold of the plurality of interference thresholds determined for a first frequency bin that includes the first interfered cell.

In one or more embodiments, identifying the interfered cells further includes determining that a second magnitude of a second interfered cell of the interfered cells is greater than a second interference threshold of the plurality of interference thresholds determined for a second frequency bin that includes the second interfered cell.

In one or more embodiments, determining the scaling factors further includes determining a first scaling factor for the first interfered cell based on the first magnitude of the first interfered cell, the first interference threshold, and a maximum magnitude among cells of the first frequency bin.

In one or more embodiments, determining the first scaling factor further includes determining the first scaling factor based on a first quotient of the first interference threshold and the maximum magnitude and a second quotient of the first interference threshold and the first magnitude of the interfered cell.

In one or more embodiments, each of the scaling factors has a respective value of between 0 and 1.

In one or more embodiments, non-interfered cells of the spectrogram are unchanged when generating the interference-suppressed spectrogram.

According to a further aspect, there is provided a radar system which includes a processing unit including a signal processor configured to generate a spectrogram by converting samples of received radar signals into a time-frequency domain using a Short Time Fourier Transform (STFT), determine a plurality of interference thresholds, including a first interference threshold for a first frequency bin of the spectrogram and a second interference threshold for a second frequency bin of the spectrogram, identify interfered cells of the spectrogram by comparing the plurality of interference thresholds and magnitudes of the interfered cells, the interfered cells including a first interfered cell that exceeds the first interference threshold and a second interfered cell that exceeds the second interference threshold, determine scaling factors for the interfered cells based on at least the plurality of interference thresholds and magnitudes of the interfered cells, the scaling factors including a first scaling factor determined based on a first magnitude of the first interfered cell and the first interference threshold a second scaling factor determined based on a first magnitude of the second interfered cell and the second interference threshold, generate an interference-suppressed spectrogram by applying the scaling factors to the interfered cells to reduce the magnitudes of the interfered cells by multiplying the first interfered cell by the first scaling factor and multiplying the second interfered cell by the second scaling factor, and generate interference-suppressed samples based on the interference-suppressed spectrogram.

The foregoing description refers to elements or nodes or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with) another element, and not necessarily mechanically. Thus, although the schematic shown in the figures depict one exemplary arrangement of elements, additional intervening elements, devices, features, or components may be present in one or more embodiments of the depicted subject matter.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

**Claims**

1. A radar system comprising:

   communication circuitry configured to transmit radar signals and to receive reflections of the transmitted radar signals reflected by an object in an environment of the radar system; and
   processing circuitry configured to:

      generate a spectrogram by converting samples of the reflections into a time-frequency domain;
      determine a plurality of interference thresholds, including a respective interference threshold for each frequency bin of the spectrogram;
      identify interfered cells of the spectrogram based on the plurality of interference thresholds;
      determine scaling factors for the interfered cells based on at least the plurality of interference thresholds and magnitudes of the interfered cells;
      generate an interference-suppressed spectrogram by applying the scaling factors to the interfered cells to reduce the magnitudes of the interfered cells; and
      generate interference-suppressed samples based on the interference-suppressed spectrogram.

2. The radar system of claim 1, wherein the processing circuitry is configured to generate the spectrogram by performing a Short Time Fourier Transform (STFT) on the samples of the reflections.

3. The radar system of claim 2, wherein the processing circuitry is configured to generate the interference-suppressed samples by performing an inverse STFT on the interference-suppressed spectrogram.

4. The radar system of any preceding claim, wherein to identify the interfered cells, the processing circuitry is further configured to:

determine that a first magnitude of a first interfered cell of the interfered cells is greater than a first interference threshold of the plurality of interference thresholds determined for a first frequency bin that includes the first interfered cell.

5. The radar system of claim 4, wherein, to identify the interfered cells, the processing circuitry is further configured to: determine that a second magnitude of a second interfered cell of the interfered cells is greater than a second interference threshold of the plurality of interference thresholds determined for a second frequency bin that includes the second interfered cell.

6. The radar system of claim 4 or 5, wherein, to determine the scaling factors, the processing circuitry is further configured to: determine a first scaling factor for the first interfered cell based on the first magnitude of the first interfered cell, the first interference threshold, and a maximum magnitude among cells of the first frequency bin.

7. The radar system of claim 6, wherein, to determine the first scaling factor for the first interfered cell, the processing circuitry is further configured to: determine the first scaling factor based on a first ratio of the first interference threshold to the maximum magnitude and a second ratio of the first interference threshold to the first magnitude of the interfered cell.

8. The radar system of claim 7, wherein applying the scaling factors to generate the interference-suppressed spectrogram comprises multiplying the first interfered cell by the first scaling factor.

9. The radar system of any preceding claim, wherein each of the scaling factors has a respective value of between 0 and 1.

10. The radar system of any preceding claim, wherein non-interfered cells of the spectrogram are unchanged when generating the interference-suppressed spectrogram.

11. A method comprising:

generating, by processing circuitry of a radar system, a spectrogram by converting samples, of reflections of transmitted radar signals reflected by an object in an environment of the radar system, into a time-frequency domain;
determining, by the processing circuitry, a plurality of interference thresholds, including a respective threshold for each frequency bin of the spectrogram;
identifying, by the processing circuitry, interfered cells of the spectrogram based on the plurality interference thresholds;
determining, by the processing circuitry, scaling factors for the interfered cells based on at least the plurality of interference thresholds and magnitudes of the interfered cells;
generating, by the processing circuitry, an interference-suppressed spectrogram by multiplying the interfered cells by the scaling factors to reduce the magnitudes of the interfered cells; and
generating, by the processing circuitry, interference-suppressed samples based on the interference-suppressed spectrogram.

12. The method of claim 11, wherein generating the spectrogram includes: performing a Short Time Fourier Transform (STFT) on the samples of the reflections.

13. The method of claim 12, wherein generating the interference-suppressed samples includes: performing an inverse STFT on the interference-suppressed spectrogram.

14. The method of any of claims 11 to 13, wherein identifying the interfered cells further comprises: determining that a first magnitude of a first interfered cell of the interfered cells is greater than a first interference threshold of the plurality of interference thresholds determined for a first frequency bin that includes the first interfered cell.

15. The method of claim 14, wherein identifying the interfered cells further comprises: determining that a second magnitude of a second interfered cell of the interfered cells is greater than a second interference threshold of the plurality of interference thresholds determined for a second frequency bin that includes the second interfered cell.

FIG. 1

200

| INPUT ADC SAMPLES | 202 |

↓

| PERFORM INTERFERENCE SUPPRESSION | 204 |

↓

| PERFORM RANGE COMPRESSION (FAST-TIME FFT) | 206 |

↓

| PERFORM DOPPLER COMPRESSION (SLOW-TIME FFT) | 208 |

↓

| PERFORM CFAR DETECTION | 210 |

↓

| CONSTRUCT MIMO ARRAY | 212 |

↓

| GENERATE OBJECT POSITION DATA BASED ON AOA ESTIMATION | 214 |

↓

| GENERATE OBJECT TRACKING DATA | 216 |

# FIG. 2

300

204

COMPUTE SPECTROGRAM USING STFT — 302

COMPUTE ABSOLUTE VALUES OF SPECTROGRAM CELLS — 304

DETERMINE THRESHOLD FOR EACH FREQUENCY BIN OF THE SPECTROGRAM — 306

FOR EACH FREQUENCY BIN OF THE SPECTROGRAM, DETERMINE ADAPTIVE SCALING FACTOR FOR INTERFERED CELLS WITH MAGNITUDES EXCEEDING THE THRESHOLD FOR THAT FREQUENCY BIN — 308

GENERATE INTERFERENCE-SUPPRESSED SPECTROGRAM BY APPLYING ADAPTIVE SCALING FACTORS TO ASSOCIATED INTERFERED CELLS — 310

COMPUTE INVERSE STFT — 312

# FIG. 3

404

RAW ADC
SAMPLES
402

STFT →

FR

| $X_{11}$ | $X_{12}$ | $X_{13}$ | ... | $X_{1j}$ |
|---|---|---|---|---|
| $X_{21}$ | $X_{22}$ | $X_{23}$ | ... | $X_{2j}$ |
| $X_{31}$ | $X_{32}$ | $X_{33}$ | ... | $X_{3j}$ |
| ... | ... | ... | ... | ... |
| $X_{i1}$ | $X_{i2}$ | $X_{i3}$ | ... | $X_{ij}$ |

TIME

APPLICATION OF ADAPTIVE SCALING FACTORS

406

FR

| $M_{11}X_{11}$ | $X_{12}$ | $X_{13}$ | ... | $X_{1j}$ |
|---|---|---|---|---|
| $X_{21}$ | $M_{22}X_{22}$ | $X_{23}$ | ... | $M_{2j}X_{2j}$ |
| $X_{31}$ | $X_{32}$ | $M_{33}X_{33}$ | ... | $X_{3j}$ |
| ... | ... | ... | ... | ... |
| $M_{i1}X_{i1}$ | $X_{i2}$ | $X_{i3}$ | ... | $M_{ij}X_{ij}$ |

TIME

iSTFT →

INTERFERENCE-
SUPPRESSED
ADC SAMPLES
408

# FIG. 4

EP 4 600 688 A1

**FIG. 5**

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/242972 A1 (MELZER ALEXANDER [AT] ET AL) 8 August 2019 (2019-08-08) * paragraphs [0002], [0032], [0034], [0037], [0043] - [0046], [0053] - [0071], [0077] - [0079]; figures 1, 3, 4, 6, 7, 12-17, 19, 20 * ----- | 1-15 | INV. G01S7/02 G01S7/35 G01S13/34 G01S13/42 G01S13/58 |
| X | WO 2022/156905 A1 (SYMEO GMBH [DE]) 28 July 2022 (2022-07-28) * page 11, line 4 - page 13, line 2; figures 2, 5, 8-10 * * page 15, lines 21-22 * * page 16, lines 10-11 * ----- | 1-15 | ADD. G01S13/931 |

TECHNICAL FIELDS
SEARCHED        (IPC)

G01S

The present search report has been drawn up for all claims

| Place of search | Date of completion of the search | Examiner |
|---|---|---|
| Munich | 21 May 2025 | Schmelz, Christian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 15 5935

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2025

| Patent document cited in search report | Publication date | Patent family member(s) | Publication date |
|---|---|---|---|
| US 2019242972 A1 | 08-08-2019 | CN 110133602 A | 16-08-2019 |
| | | DE 102018102816 B3 | 04-07-2019 |
| | | KR 20190096291 A | 19-08-2019 |
| | | US 2019242972 A1 | 08-08-2019 |
| WO 2022156905 A1 | 28-07-2022 | EP 4281800 A1 | 29-11-2023 |
| | | JP 2024503905 A | 29-01-2024 |
| | | US 2024069152 A1 | 29-02-2024 |
| | | WO 2022156905 A1 | 28-07-2022 |

EPO FORM P0459

For more details about this annex : see Official Journal of the European Patent Office, No. 12/82